# EUROPEAN PATENT SPECIFICATION

(11) **EP 2 770 400 B1**
(45) Date of publication and mention of the grant of the patent: **21.09.2016**
(21) Application number: 14169441.4
(22) Date of filing: 03.03.2006
(51) Int. Cl.: G06F 1/16, G06F 3/044, G06F 3/0488

(54) **Multi-functional hand-held device**
Multifunktionelle tragbare Vorrichtung
Dispositif portable multifonctions

(30) Priority: 04.03.2005 US 658777 P; 16.03.2005 US 663345 P
(43) Date of publication of application: 27.08.2014
(62) Divisional of application: 06737515.4
(73) Proprietor: APPLE INC., Cupertino, CA 95014 (US)
(72) Inventor: Hotelling, Steven Porter, Cupertino, CA 95014 (US)
(74) Representative: Lang, Johannes

(56) References cited:
- US-A1- 2003 006 974
- US-A1- 2003 095 095
- US-A1- 2003 206 202
- US-A1- 2003 234 768
- US-A1- 2004 263 484

## Description

### CROSS-REFERENCE TO RELATED APPLICATIONS

This application is related to the following applications:
(1) U.S. Patent Application No.: 10/188,182, titled "Touch Pad for Handheld Device," filed on July 1, 2002, published as US 2003/076306 A1;
(2) U.S. Patent Application No.: 10/722,948, titled "Touch Pad for Handheld Device," filed on November 25, 2003, published as US 2005/110768 A1 ;
(3) U.S. Patent Application No.: 10/643,256, titled "Movable Touch Pad with Added Functionality," filed on August 18, 2003, published as US 2005/052 25 A1;
(4) U.S. Patent Application No.: 10/654, 108, titled "Ambidextrous Mouse," filed on September 2, 2003, published as US 2008/297476 A1;
(5) U.S. Patent Application No.: 10/840,862, titled "Multipoint Touch Screen," filed on May 6, 2004, published as US 2006/097991 A1;
(6) U.S. Patent Application No: 10/903,964, titled "Gestures for Touch Sensitive Input Devices," filed on July 30, 2004, published as US 2006/026521 A1;
(7) U.S. Patent Application No.: 11/038,590, titled "Mode-Based Graphical User Interfaces for Touch Sensitive Input Devices," filed on January 18, 2005, published as US 2006/026535 A1; and
(8) U.S. Patent Application No.: 11/057,050, titled "Display Actuator," filed on February 11, 2005, published as US 2006/181517 A1;
(9) U.S. Patent Application 11/115,539, titled "Hand-Held Electronic Device with Multiple Touch Sensing Devices," filed April 26, 2005, published as US 2006/197750 A1.

### BACKGROUND

There exist today many types of hand-held electronic devices, each of which utilizes some sort of user interface. The user interface typically includes an output device in the form of a display, such as a Liquid Crystal Display (LCD), and one or more input devices, which can be mechanically actuated (*e.g*., switches, buttons, keys, dials, joysticks, joy pads) or electrically activated (*e,g,,* touch pads or touch screens). The display is typically configured to present visual information such as text and graphics, and the input devices are typically configured perform operations such as issuing commands, making selections or moving a cursor or selector in the electronic device. Each of these well known devices has considerations such as size and shape limitations, costs, functionality, complexity, etc. that must be taken into account when designing the hand-held electronic device. In most cases, the user interface is positioned on the front face (or front surface) of the hand-held device for easy viewing of the display and easy manipulation of the input devices.

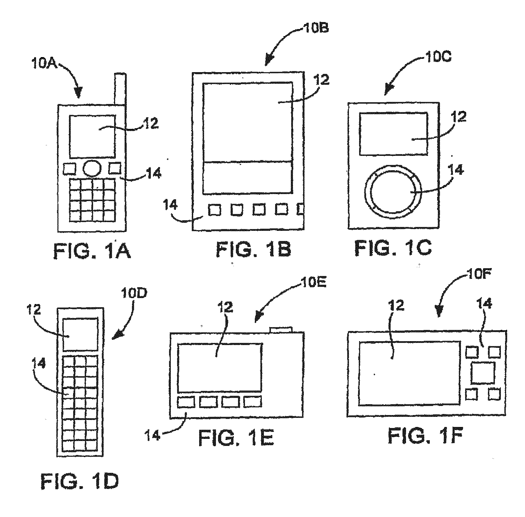

Figs. 1A-1F are diagrams of various hand-held electronic devices including for example a telephone 10A (Fig. 1A), a PDA 10B (Fig. 1B), a media player 10C (Fig. 1C), a remote control 10D (Fig. 1D), a camera 10E (Fig. 1E), and a GPS module 10F (Fig. 1F). In each of these devices 10, a display 12, which is secured inside the housing of the device 10 and which can be seen through an opening in the housing, is typically positioned in a first region of the electronic device 10. Each of these devices also include one or more input devices 14, which are typically positioned in a second region of the electronic device 10 next to the display 12.

To elaborate, the telephone 10A typically includes a display 12 such as a character or graphical display, and input devices 14 such as a number pad and in some cases a navigation pad. The PDA 10B typically includes a display 12 such as a graphical display, and input devices 14 such as a stylus based resistive touch screen and buttons. The media player 10C typically includes a display 12 such as a character or graphic display and input devices 14 such as buttons or wheels. The iPod® media player manufactured by Apple Computer, Inc. of Cupertino, California is one example of a media player that includes both a display and input devices disposed next to the display. The remote control 10D typically includes an input device 14 such as a keypad and may or may not have a character display 12. The camera 10E typically includes a display 12 such as a graphic display and Input devices 14 such as buttons. The GPS module 10F typically includes a display 12 such as graphic display and input devices 14 such as buttons, and in some cases a joy pad.

Recently, traditionally separate hand-held electronic devices have begun to be combined in limited ways. For example, the telephone 10A has been combined with the PDA 10B. One problem that has been encountered is in the way inputs are made into the device. Each of these devices has a particular set of input mechanisms for providing inputs into the device. Some of these input mechanisms are generic to all the devices (*e.g*., power button) while others are not. The ones that are not generic are typically dedicated to a particular functionality of the device. By way of example, PDAs typically include four dedicated buttons while cell phones typically include a numeric keypad and at least two dedicated buttons.

Thus it is a challenge to design a merged device with limited input devices without adversely affecting the dedicated inputs for each device. As will be appreciated, it is preferable, not to overload the hand-held devices with a large number of input mechanisms as this tends to confuse the user and take up valuable space, *i.e.,* "real estate." In the case of hand-held devices, space is at a premium because of their small size. At some point there is not enough space on the device to house all the necessary buttons and switches, etc. This is especially true when considering that all these devices need a display that typically takes up a large amount of space on its own. To increase the number of input devices beyond some level, designers would have to decrease the size of the display. However, this will often leave a negative impression on the user because the user typically desires the largest display possible. Alternatively, to accommodate more input devices designers may opt to increase the size of the device. This, too, will often leave a negative impression on a user because it would make one-handed operations difficult, and at some point, the size of the device becomes so large that it is no longer considered a hand-held device.

Therefore what is needed in the art is an improved user interface that works for multi-functional hand-held devices.

US2003/234768 A1 discloses a hand-held electronic apparatus with a touch panel on the rear of the device and a touch screen, both being capacitive multi-touch panels. Vibration feedback may be provided.

US2003/206202 A1 discloses a hand-held electronic apparatus with touch panel portion comprising display and touch panel; pressing the touch panel, causing it to slide slightly, is detected and used to launch functions selected by touch position. US2004/263484 A1 discloses a hand-held electronic apparatus with multi-touch panel; a point & click function, by way of pressure sensitive means under the touch panel, is possible. US2003/095095 A1 discloses a hand-held electronic apparatus with a touch panel on the rear side; a full screen display may be partitioned (virtually) into a soft control region (soft keys) and data display region. US2003/006974 A1 discloses a hand-held electronic apparatus, eg. PDA, with touch screen; commands may be generated using combinations of user input activities, eg. stylus touch on screen plus button press on the PDA. 3

### SUMMARY

Disclosed herein is a multi-functional hand-held device capable of configuring user inputs based on how the device is to be used. Preferably, the multi-functional hand-held device has at most only a few physical buttons, keys, or switches so that its display size can be substantially increased. In other words, by eliminating physical buttons, keys, or switches from a front surface of an electronic device, additional surface area becomes available for a larger display. Ultimately this strategy would allow a substantially full screen display. As used herein, a full screen display is a display that consumes, or at least dominates, a surface (*e.g.,* front surface) of an electronic device.

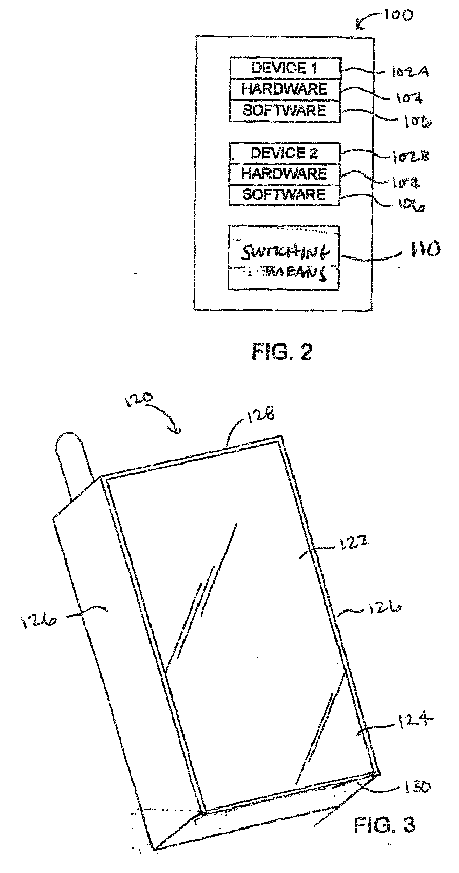

Various embodiments of a multi-functional hand-held device are discussed below with reference to Figs. 2-28. However, those skilled in the art will appreciate that the detailed description given herein with respect to these figures is exemplary and not exhaustive and that many variations on these embodiments are possible. A device according to the invention is defined in claim 1. A method according to the invention is defined in claim 9.

### BRIEF DESCRIPTION OF THE DRAWINGS

The invention may best be understood by reference to the following description taken in conjunction with the accompanying drawings in which:
Figs. 1A-1F are diagrams of various electronic devices.
Fig. 2 is a simplified diagram of a multi-functional hand-held device.
Fig. 3 is a perspective view of a substantially full screen hand-held device with a limited number of limited buttons.
Fig. 4 is a front view of a hand-held device with at least one button.
Fig. 5 is a diagram of a GUI separated into a standard region and a control region.
Fig. 6 is a diagram of a GUI separated into a standard region and a control region.
Fig. 7 is a diagram of a GUI separated into a standard region and a control region.
Fig. 8 is a diagram of a GUI separated into a standard region and a control region.
Fig. 9 illustrates an exemplary a GUI for a PDA.
Fig. 10 illustrates an exemplary GUI for a cell phone.
Fig. 11 illustrates an exemplary GUI for a media player.
Fig. 12 illustrates an exemplary GUI for a video player.
Fig. 13 illustrates an exemplary GUI for a game player.
Fig. 14 illustrates an exemplary GUI for a camera.
Fig. 15 illustrates an exemplary GUI for a GPS.
Fig. 16 illustrates an exemplary GUI for a remote control.
Fig. 17 illustrates an exemplary GUI for a hand top.
Fig. 18 illustrates an exemplary GUI for a main menu of a multi-functional hand held device.
Fig. 19 is a side elevation view, in cross section, of a hand-held device incorporating a force sensitive display.
Fig. 20 illustrates an input device that combines touch sensing and force sensing devices to provide x, y and z components when touched.
Fig. 21 is a side elevation view of an I/O device that combines a display with touch screen and a force sensing mechanism.
Fig. 22 is a side elevation view of an input device.
Fig. 23 is a side view, in cross section, of a hand-held device that incorporates a squeeze feature.
Fig. 24 is a side view, in cross section, of a hand-held electronic device.
Fig. 25 is a block diagram of a touch sensing method.
Fig. 26 is a block diagram of touch sensing method.
Figs. 27A-E are tables representing one example of a touch vocabulary associated with a music player.
Fig. 28 is a block diagram of an exemplary multi-functional hand-held device.

### DETAILED DESCRIPTION

### I. MULTI-FUNCTIONALITY

Electronic device manufacturers have discovered the advantages of combining separate hand-held electronic devices to form multi-function devices. By having a single multi-function device, a user is not burdened with carrying, purchasing, and maintaining multiple devices. Further, the user is not limited in the operations that can be performed, *i.e.,* the user can perform different operations with a single device that would have otherwise required the use of a different devices.

As used herein, the term "multi-functional" is used to define a device that has the capabilities of two or more traditional devices in a single device. The multi-functional device may, for example, include two or more of the following device functionalities: PDA, cell phone, music player, video player, game player, digital camera, handtop, Internet terminal, GPS or remote control. For each new device functionality that is added to a single device, the complexity and size of the device tends to increase. Therefore, with hand-held devices, there is typically a trade-off between keeping the footprint small and complexity low while still maximizing the functionality of the device.

In some cases, combining devices may result in redundant hardware components, which allows components to be used for multiple different, device functionalities. In other cases, certain hardware components are distinct to each device and therefore additional space and connectivity must be made available. Furthermore, each device functionality typically has its own programming or application software and, therefore, the multifunction device must be designed with enough memory to accommodate all the various software components.

A personal digital assistant (PDA) is a mobile hand-held device that provides computing and information storage and retrieval capabilities for personal and/or business use. PDAs are severally capable of tracking names, addresses, phone numbers and appointments. They are also often capable of taking notes, performing calculations, paging, data messaging, and electronic mail. PDAs may also include functionality for playing simple games, music, and other media files. Examples of PDAs include the Palm Pilot and Blackberry.

Like most hand-held devices, PDAs typically include a display and various input devices. The input devices may include a stylus and touch screen that work in combination with a handwriting recognition program, keypads, mini-keyboards, navigation pads, and/or soft or fixed function buttons.

Cell phones are mobile telephones that allow a user to connect to other telephones using a cellular network. Cell phones typically include a transceiver for transmitting and receiving telephone calls, controls such as a navigation pad for traversing through a display, a keypad for making numeric entries (and in some cases alphabetic entries), and soft or fixed function buttons. For example, in many cell phones one fixed function button is used for starting a call and another fixed function button is used for ending a call.

Media players come in a variety of forms. Music players are generally configured to store, process and output music. Music players can be based on the MP3 or AAC format, which is a compression system for music. Music Players typically include a microprocessor, memory, display, audio jack, data port and playback controls. The playback controls typically include features such as menu, play/pause, next, previous, volume up, and volume down. Video players are similar to music players in most respects. In some cases, they may include a data storage device for receiving a removable storage medium such as a DVD. The iPod® media player manufactured by Apple Computer, Inc. of Cupertino, California is one example of a media player.

Handtops are general purpose computers similar to laptops, but in a smaller form factor. Handtops typically include a display and a full keyboard.

Fig. 2 is a simplified diagram of a multi-functional hand-held device 100. The multi-functional hand-held device 100 integrates at least two devices 102 into a single device. Each device 102 includes both hardware and software components 104 and 106, which are integrated into multi-functional hand-held device 100. It should be pointed out that the multi-functional hand-held device 100 is not limited to only two devices, and may in fact integrate any number of devices.

Multi-functional device 100 also includes switch 110, which that allows multi-functional device 100 to be switched from one device operating mode to another device operating mode. For example, switch 110 may allow a user to cycle through cell phone, media player, and PDA modes of operation. Once a particular operating mode is selected, the multi-functional device 100 operates as the selected device. For example, the programming related to the selected device is activated for use by the multi-functional hand-held device. The programming may include reconfiguring the UI based on the selected device so that the inputs made by the user correlate to the device in use. For example, the functions of any physical buttons, switches or dials as well as soft buttons, switches or dials can be reconfigured to correspond to the selected device.

However, the operating modes of multi-functional hand-held device 100 need not completely independent. In many cases, it will be desirable to allow the multiple functionalities to interact with each other. For Example, a user may look up a telephone number of a contact in the PDA and pass this number to the phone to be dialed.

### II. FORM FACTOR

The form factor of a hand-held device is generally a device that can easily be held in one hand. A typical hand-held device includes a small display in an upper portion of the front surface of the device and input controls in a lower portion of the front surface of the device. The device may additionally include controls and ports on the top, bottom, and side surfaces. Prior art hand-held devices have typically had small displays which causes some dissatisfaction for users of these devices. It is generally preferred to have larger displays so that more information can be displayed or the information being displayed can be more easily viewable (*e.g.,* larger text). In the case of video players and game players in particular, larger displays are much preferred over smaller ones.

However, the use of large displays has been limited in the past because the required input controls often take up substantial portions of the available space. Furthermore, as device functionality converges, the number of controls on the device typically increases as each device includes its own dedicated controls. Therefore devices must be made larger or the displays must be smaller to accommodate all the new controls. Both of these outcomes are unsatisfactory. Larger devices are bulky and hard to use, and smaller screens are difficult to utilize for both relaying information and reading information from the screen.

### A. ONE-HANDED VS. TWO-HANDED OPERATION

A hand-held electronic device may be directed at one-handed operation or two-handed operation. In one-handed operation, a single hand is used to both support the device as well as to perform operations with the user interface during use. Cellular phones and media players are examples of hand-held devices are generally intended to can be operated solely with one hand. In the case of a cell phone, for example, a user may grasp the phone in one hand between the fingers and the palm and use the thumb to make entries using keys, buttons or a # joy pad.

In two-handed operation, one hand is used to support the device while the other hand performs operations with a user interface during use or, alternatively, both hands support the device as well as perform operations during use. PDA's and game players are examples of hand-held device that are typically operated with two hands. In the case of a PDA, for example, the user may grasp the device with one hand and make entries using the other hand, for example, using a stylus. In the case of a game player, the user typically grasps the device in both hands and make entries using either or both hands while holding the device.

### B. FOOTPRINT/SIZE

Hand-held devices may have a variety different footprints or sizes. The footprint is typically associated with how the device is going to be used. Devices such as PDAs are typically used with both hands and thus they tend to be larger. Alternatively, cell phone handsets are typically used with only one hand, and thus they tend to be smaller. When integrating multiple devices, it is important task to determine the appropriate footprint of the device. For example, some believe that PDAs are too large for phone use while cell phones are too small for PDA use. Designers generally must consider the primary use of the device and gear the footprint towards that use. Although there are different footprints, there are typically minimum and maximum footprints. If the footprint is too large or too small, the device may be difficult to use.

Because of their size, the smaller devices are typically placed in a pocket while the larger devices are not. A media player is one example of a hand-held device that is sized for placement into a pocket of the user. By being pocket-sized, the user does not have to directly carry the device and therefore the device can be taken almost anywhere the user travels (*e.g.,* the user is not limited by carrying a large, bulky and often heavy device, as in a laptop or notebook computer).

Generally it is preferred, although not necessary, that hand-held devices of the type disclosed herein have dimensions of about 12.5 x 7.5 x 2.5 cm ( 5 in x 3 in x 1 in) and perhaps about 10.4 x 6.1 x 1.9 cm (4.1 in x 2.4 in x 0.75 in).

### C. FULL SCREEN DISPLAY

Because the footprint of a multifunctional hand-held device is substantially fixed by the intended primary use of the device, it becomes important for designers to determine an appropriate layout for the UI. For example, some devices may work better with a limited number of buttons and a large display while others may work better with a large number of buttons or a complete keyboard and a small display.

A preferred multi-functional hand-held device may be configured with a full screen display or a near full screen display. A full screen display consumes substantially the entire front surface of the device. The display may extend edge to edge or may fit within a small bezel of the housing at the edge of the device. The full screen display may consumes 90% or more of a front surface of a housing for a hand-held electronic device.

The full screen display may have a variety of different configurations depending on the overall footprint of the device. If the device is wide, the full screen display may have a traditional aspect ratio of about 4:3. If the device is elongated, the full screen display may have an aspect ratio that is more panoramic such as 16:9.

### D. LIMITED NUMBER OF MECHANICAL ACTUATORS

To accommodate a full screen display, the multi-functional hand-held device is preferably configured with a limited number of physical buttons. Because a limited number of physical buttons are provided, the hand-held device preferably uses a touch screen as the primary input device. Touch screens are transparent touch sensing devices that are positioned over displays. They typically work in conjunction with a GUI presented on the display. For example, the GUI may present an on-screen button, and the touch screen may detect when a user presses the on-screen button (*e.g.,* places their finger or stylus over the on-screen button). Touch screens and GUI's are described in greater detail below.

The hand-held device may be constructed with only cross-functional physical buttons, *i.e.,* there are no buttons dedicated to individual devices. These type of buttons may include power buttons and hold switches. In another embodiment, the hand-held device may not include any physical buttons at all. In some embodiments, the physical buttons are limited to only the sides and back surface of the hand-held device. In other embodiments, the physical buttons of the hand-held device are limited to the upper and lower portion of the sides so that there are no buttons in the regions of the sides where a user would physically support the device (*i.e.,* holding region). In still other embodiments, the physical buttons may be located on the front surface, but only in the bezel region surrounding the display. In some embodiments, the buttons may be located on only the top and bottom surfaces of the device.

Fig. 3 is a perspective view of a substantially full screen multi-functional hand-held device 120 with a limited number of buttons. There are no physical buttons on the front and side surfaces 124 and 126. The front surface is used entirely for the display 122. Further, because the sides 126 are used for grasping the device 120 it may be preferred to leave the sides free from buttons to prevent accidental actions in the event a user inadvertently presses a button while supporting the device. Although the top surface 128 and bottom surface 13 O would not typically be used to hold the device, these surfaces are not ideal locations for buttons that are often actuated because it would be awkward to reach these buttons when operating the device with one hand.

The top surface 128 may be reserved for buttons that have limited action and generic functions that are cross-functional, for example, power and hold switches. The top and bottom surfaces 128 and 130 are also well suited for placement of I/O and communication ports. The top surface 128 may, for example, include a headset/microphone jack and an antenna, and the bottom surface 130 may include power and data ports.

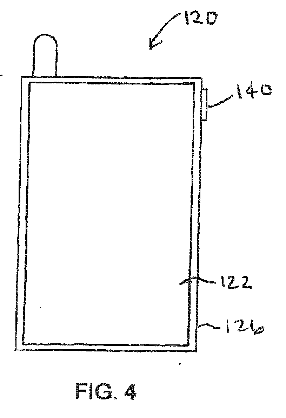

In some cases, it may be desirable to place buttons in the upper or lower regions of the side surfaces 126 out of the way of the grasping hand. This may be particularly well suited for elongated devices that are larger than the width of the grasping hand. As shown in Fig. 4, the hand-held device 120 includes a button 140 in the upper region on the side surface 126 of the hand-held device 120. Because the button 140 is in the upper region, it tends to be out of the way of the grasping hand and therefore accidental activation is substantially eliminated. The upper button may be configured to switch the functionality of the multi-functional device *i.e.,* button 140 may be switch 110 of Fig.2. For example, by pressing the button 140, a new device functionality is activated, and the current device functionality is deactivated. Although the term, button is used, it should be appreciated that the button 140 may correspond to a dial, wheel, switch and/or the like.

Generally it would be preferred, although not required, to limit the number of physical buttons to eight or fewer, and perhaps five or fewer.

### III. ADAPTABLITY

To limit the number of physical controls on the device (thereby maximizing the display area), the multi-functional hand-held device is preferable adaptable, *i.e.,* the device is capable of changing its UI based on how the device is to be used. For example, if a cell phone functionality of the multi-functional device is to be used, the UI changes to accommodate the cell phone. Alternatively, if the PDA aspect of the multi-functional device is to be used, the UI changes to accommodate the PDA, etc. In essence, the multi-functional device is capable of reconfiguring its user interface based on the state or mode of the device.

Adaptability may be accomplished by reassigning the functions of the limited number of physical buttons for each device functionality. For example, a button may perform one function when a first device is activated and another when another device is activated. While this may work, it suffers from physical limitations (*i.e.,* the number of buttons) and can be confusing to the user (who must keep track of different button meanings).

Alternatively adaptability may be accomplished by virtually incorporating the physical inputs for each functionality into the GUI in conjunction with a touch screen. This allows the GUI to adapt to whatever device is selected, and the touch screen can receive inputs corresponding to the GUI. With a GUI for each functionality, the UI for the hand-held device adapts such that the multi-function device, in effect, becomes a particular device. For example, if the cell phone functionality is selected, the GUI presents a set of virtual or soft controls that look similar to the physical controls typically used on a cell phone, such as a keypad, function buttons and possibly a navigation pad, for example.

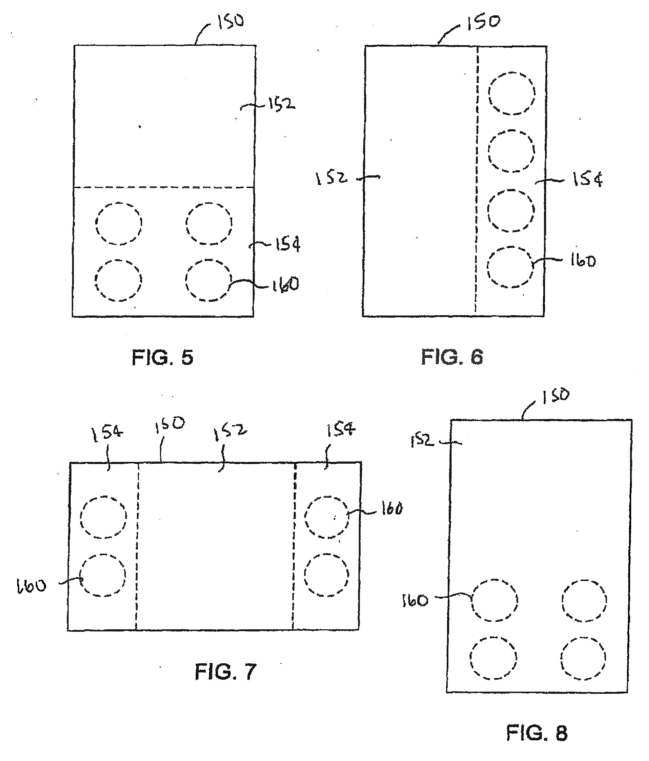

The entire display may be used to present this information, or only a portion of the display may be used for the GUI controls. In the later case, referring to Figs. 5-8, the GUI 150 may be separated into a standard region 152 and a control region 154. The standard region 152 represents what would normally be displayed on the display 122 when using a particular device. That is, the standard GUI screens associated with the selected device are displayed in the standard region. For example, in the case of the PDA, a main menu (window with a set of icons), calendar, address book or date book may be displayed in the standard region 152. The control region 154, on the other hand, virtually represents the physical controls that would normally be physically placed on a particular device. That is, the virtual controls that mimic the physical controls are displayed in the control region 154. For example, in the case of the PDA, the control region 154 may include virtual representations of a hand writing recognition area, a navigation pad and the standard function buttons.

The standard and control regions 152 and 154 can be positioned at any position on the display 122 (top, bottom, sides, center, etc.). For example, as shown in Fig. 5, they may be positioned vertically relative to one another (one on top of the other) or as shown in Fig. 6, they may be positioned horizontally relative to one another (side by side). These configurations can be used in either portrait or landscape modes. By way of example, in cases where the device is operated in landscape mode, the standard region 152 may be placed on one side and the control region may be placed on the opposite side. Landscape orientation may, for example, facilitate one handed operation. In some cases, the side on which the controls are displayed is based on the handedness of the user. For example, the controls may be place on the right side for right-handed users, and the controls may be placed on the left side for left-handed users. Alternatively, the controls may be placed on both sides as shown in Fig. 7. This arrangement is particularly swell suited for game playing. Furthermore, the amount of area dedicated to each portion may be widely varied. For example, the screen may be divided equally and in other cases one or the other portion constitutes a greater amount of the display. In some cases, the standard region 154 is maximized to increase the normal viewing area of the display.

When a particular functionality is selected for use, the hand-held device loads the software for the selected functionality and configures the GUI 150 including the standard region 152 and the control region 154. The controls in the control region 154 can therefore be used to control whatever is being shown in the standard region 152. In some cases, the control region 154 may even change in accordance with the needs of each displayed window for the particular device.

Alternatively, as shown in Fig. 8, virtual controls 160 may be overlaid on top of the standard region 152 so that the standard region 152 can fully utilize the entire display 122. In fact, the virtual controls 160 may appear and disappear as needed. For example, the user may touch the screen and this may drive the device to display the controls over a portion of the display including whatever is already displayed. Examples of virtual controls that operate in this manner can be found in U.S. Patent Application No.: 11/038,590, titled "Mode-Based Graphical User Interfaces for Touch Sensitive Input Devices," filed on January 18, 2005, published as US 2006/026535 A1.

### A. GUI BASED ON FUNCTIONALITY

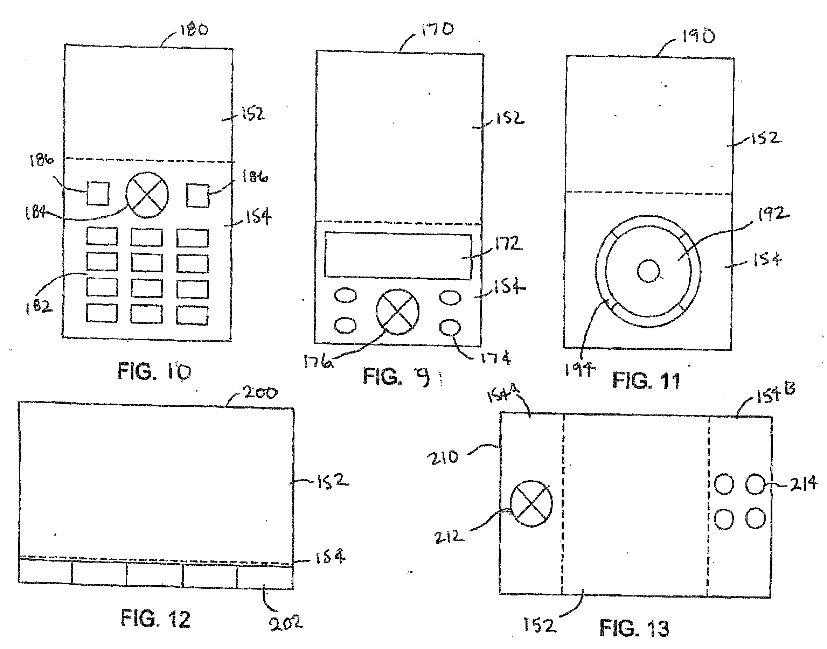

Figs. 9-17 illustrate various examples of GUIs for different states or modes of the multi-functional device.

Fig. 9 is a diagram of a GUI 170 that is used in a PDA mode. As shown, the GUI is divided into a standard region 152 and a control region 154. Located inside the control region 154 are a virtual handwriting pad 172, four virtual buttons 174 and a virtual navigation pad 176.

Fig. 10 is a diagram of a GUI 180 that is used in a cell phone mode. As shown, the GUI 180 is divided into a standard region 152 and a control region 154. Located inside the control region 154 are a virtual keypad 182, a virtual navigation pad 184 and two virtual buttons 186.

Fig. 11 is a diagram of a GUI 190 that is used in a music player mode. As shown, the GUI 190 is divided into a standard region 152 and a control region 154. Located inside the control region 154 are a virtual scroll wheel 192 and five virtual buttons 194. Additional details on a virtual scroll wheel are provided in U.S. Patent Application No.: 11/038,590, titled "Mode-Based Graphical User Interfaces for Touch Sensitive Input Devices," filed on January 18, 2005, published as US 2006/026535 A1.

Fig. 12 is a diagram of a GUI 200 that is used in a video player mode. As shown, the GUI 200 is divided into a standard region 152 and a control region 154. Located inside the control region 154 are a plurality of virtual buttons 202. Alternatively, the controls may appears and disappears as needed since the video player is primarily used in conjunction with a full screen viewing mode.

Fig. 13 is a diagram of a GUI 210 that is used in a game player mode. As shown, the GUI 210 is divided into a standard region 152 and two control regions 154A and 154B on the sides of the standard region 152. The left side control region 154A includes a navigation or directional pad 212, and the right side control region includes four virtual buttons 214 (or vice versa depending on the users particular needs, left or right handed).

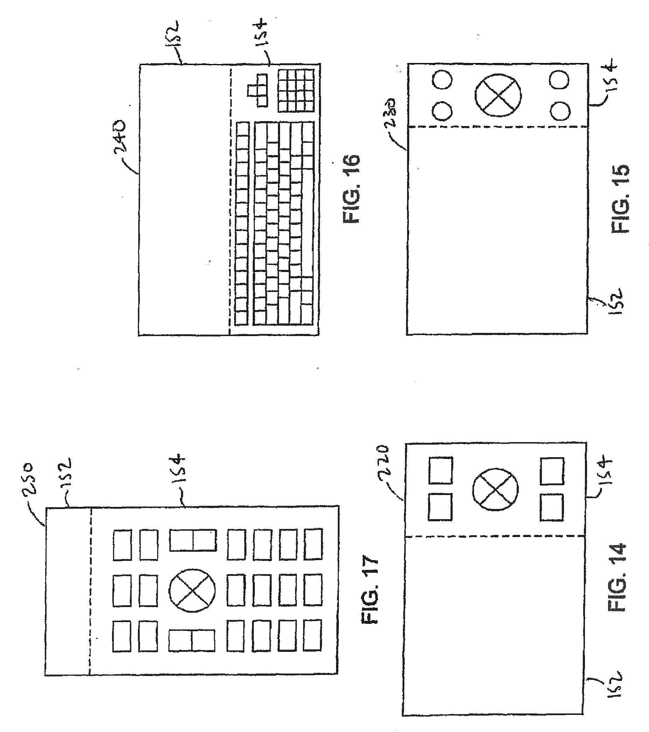

Fig. 14 is a diagram of a GUI 220 that is used in a camera mode. As shown, the GUI 220 is divided into a standard region 152 and a control region 154. The standard region 152 may represent the view finder. Located inside the control region 154 are various buttons 222 including for example picture click, zoom, flash, etc. A navigation pad 224 may also be included so that the pictures can be scrolled through or for menu navigation.

Fig. 15 is a diagram of a GUI 230 that is used in a GPS receiver mode. As shown, the GUI 230 is divided into a standard region 152 and a control region 154. Located inside the control region 154 are various buttons 222 including for example zoom, pan, etc. A navigation pad 224 may also be included.

Fig. 16 is a diagram of a GUI 240 that is used in a hand top mode. As shown, the GUI 240 is divided into a standard region 152 and a control region 154. Located inside the control region 154 is a virtual keyboard 242.

Fig. 17 is a diagram of a GUI 250 that is used in a remote control mode. As shown, the GUI 250 is divided into a standard region 152 and a control region 154. Located inside the control region 154 are various keys and buttons 252 associated with controlling a remote device such as a TV, DVD player, A/V amplifier, VHS, CD player, etc.

### B. SWITCHING BETWEEN DEVICES (GUI)

Before a particular device functionality can be used, it typically must be selected for use. The selection can come in a variety of forms. For example, the selection may be made via a main menu that includes soft buttons or icons that, when selected, activate the device functionality associated with the soft button. During activation, the GUI for that particular device is brought into view on the display (see Figs. 9-17) and the software associated with the device is installed, loaded or activated. From that point on, the multi-functional device operates like the selected device.

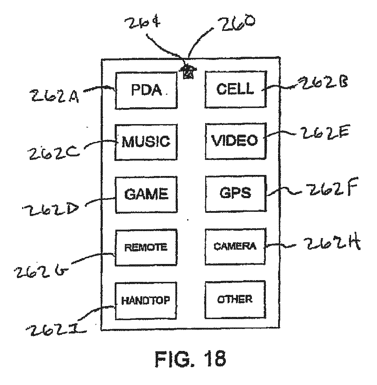

Fig. 18 illustrated an exemplary main menu GUI 260 of a multi-functional device. As shown, the GUI 260 includes icons/buttons 262 for launching each of the various device functionalities. In this particular example, the main menu page 260 includes a PDA button 262A, a cell phone button 262B, a music player button 262C, a game player button 262D, a video player button 262E, a GPS button 262F, a remote control button 262G, a camera button 262H and a handtop button 262I. The various buttons 262 are virtual buttons. When a button is pressed, the main page for the-selected functionally (*e.g.,* as shown in Figs. 9-17) is brought into view on the display. To select another device, the user simply selects a soft home button 264 located in the GUI of each device to return to the main menu page 260, and thereafter selects the desired functionality in the main menu page 260.

The selection of alternative functionalities may also be accomplished by flipping (or scrolling) through the various GUIs until the desired GUI is found. For example, the different GUIs may be incrementally brought into view page after page (or frame after frame) when a next (flip) command signal is generated (e.g., slide show effect). The transition between pages may be widely varied. The transition may be from side to side, top to bottom or center to center. The transition may also include fading in and out, popping in and out, or enlarging and reducing. The command signal may be generated by a physical or virtual button or wheel. Using a button, each press may cause a new page to be displayed. Using a wheel, a predetermined amount of rotation may cause a new page to be displayed.

The command signal may also be generated in a variety of other ways. For example, the command signal may also be generated by gestures initiated on the touch screen. For example, sliding a finger (or stylus) across the display may cause a new page to be displayed. If slid to the right, the next page may be displayed. If slid to the left, the previous page may be displayed. The command signal may also be generated by 3D device gestures created when the entire hand-held device is moved spatially. By way of example, shaking the device may cause a new page to be displayed.

The command signal may also be generated by forces that are applied to the device. By way of example, squeezing the device may cause a new page to be displayed. The command signal may also be generated by sensing the orientation of the device either relative to the ground, as sensed by accelerometers, or relative to a compass direction indicated by an internal compass. For example, if the device is at 0 degrees, a first page is displayed, at 90 degrees a second page is displayed, at 180 degrees a third page is displayed and at 270 degrees a fourth page is displayed.

The command signal may also be generated by monitoring a user's voice (*i.e.,* voice recognition). If the user calls out "PHONE," the page associated with the phone is displayed, if the user calls out "PDA," the page associated with the PDA is displayed.

The command signal may also be generated by monitoring incoming signals from other systems (whether transmitted wirelessly or via a cable). For example, if a call is received, the device may automatically configure the system as a phone. Alternatively, it may only present a control panel for taking or passing on the call.

As an alternative to integrating functionalities, the device may be configured to keep the various modes separate. That is, the device does not merge the functionality together (integrated layers and GUIs), but instead keeps them distinct from one another. In some cases, by keeping different functionalities distinct, user confusion may be reduced.

### C. OPERATING AT LEAST TWO FUNCTIONALITIES SIMULTANEOUSLY

Preferably, the user may be able to activate two or more device functionalities simultaneously. In such a case, the software for the multiple functionalities is activated simultaneously and the display operates in a split screen mode where the screen is parsed into different sections, each section including a particular device GUI. Generally this would require the GUI for each functionality to fit on the screen. The multi-function mode may be selected in a variety of ways. In one implementation, when the user simultaneously touches two or more device icons, the device activates the multiple device functionalities and brings the appropriate GUIs into view on the screen.

### D. CONFIGURABLE GUI (USER PREFERENCES)

The GUI control panels for each device functionality may be configurable by the user. For example, the user may design or customize his own UI for each device, and assign functions to the various elements of the UI. The functions may include initiating commands, selecting an item, opening a file or document, launching a program, executing instructions, viewing a menu on the display screen, etc. The parameters confiigurable by the user may include selecting the number and type of GUI elements (buttons) as well as the location of the GUI elements on the page. In some cases, the system may include a design palette that allows a user to review and/or customize the UI layout, *i.e.,* the user may quickly and conveniently review preconfigured or default layout and make changes thereto. Once changed, the modified layout will be automatically saved and thereby employed to handle future events.

### IV. INPUT DEVICES

There are a number of problems with current input devices for hand-held computers. For example, there is no realistic way to fit all the dedicated physical buttons that are needed for each device because more and more buttons must be fit into a small space. A related problem arises in that as more physical buttons are incorporated into the device, the buttons must get closer together thereby challenging the dexterity of the user. Furthermore, because physical buttons stick out they are often accidentally activated during normal use or while the device is transported *e.g.,* in a user's pocket. Finally, large numbers of small physical buttons can be confusing to the user as well as aesthetically unpleasing.

To overcome these and other problems a variety of alternative inputs arrangements are proposed (in addition to or in place of physical buttons, switches, etc.). The basic idea is to reduce the number of physical and mechanical input mechanisms (and therefore the amount of dedicated space needed on the surface of the device) and/or eliminate the physical and mechanical input mechanisms altogether. By reducing or eliminating the physical input devices, the display of the electronic device can be maximized, or alternatively the size of the electronic device can be minimized. Furthermore, such a device is more aesthetically pleasing. In some cases, the hand-held device can be configured so that it appears to only have a display and no dedicated physical input devices.

The alternative input means may also be hidden from view such that they are not visible to the user. As a result, the hand-held electronic device may appear to only have a display with no visible buttons, switches, etc. Such a device is more aesthetically pleasing (*e.g.,* may comprise smooth surfaces with no breaks gaps or lines), and, in many cases, can be made smaller without sacrificing screen size and input functionality.

### A. TOUCH SCREEN

One particularly suitable input arrangement is a touch screen. A touch screen in conjunction with GUI may be configured as the primary input arrangement for a hand-held device. A touch screen is basically a transparent input panel positioned in front of the display. A touch screen generates input signals when an object such as a finger or stylus touches or is moved across the surface of the touch screen. In most cases, touch screens allow a user to make selections and initiate movements in a GUI by simply touching the display screen via a finger. For example, a user may make a selection by pointing directly to a graphical object displayed on the display screen. Corresponding to an on-screen button for performing specific actions in the hand-held electronic device. In general, the touch screen recognizes the touch and position of the touch on the display and a controller of the hand-held electronic device interprets the touch and thereafter performs an action based on the touch event. There are several types of touch screen technologies including resistive, capacitive, infrared and surface acoustic wave.

A preferred touch screen for a multi-functional hand-held computer is a multipoint capacitive touch screen. Such a touch screen comprises several independent and spatially distinct sensing points, nodes, or regions that are positioned throughout the touch screen. The sensing points are dispersed about the touch screen with each sensing point representing a different position on the surface of the touch screen. The sensing points may be positioned in a grid or a pixel array where each sensing point is capable of generating a signal. A signal is produced each time an object is positioned over a sensing point. When an object is placed over multiple sensing points or when the object is moved between or over multiple sensing point, multiple signals can be generated. The sensing points generally map the touch screen plane into a coordinate system such as a Cartesian coordinate system or polar coordinate system. One example of such a touch screen is disclosed in U.S. Patent Application No.: 10/840,862, titled "Multipoint Touch Screen" filed on May 6, 2004, published as US 2006/097991 A1.

### B. TOUCH SENSITIVE HOUSING

A hand-held electronic device may also incorporate one or more include a touch sensitive surfaces of the device housing itself that provide either a larger surface for tracking touch inputs or smaller dedicated areas such as touch buttons for performing dedicated functions. Such surfaces may be located on any surface of the housing, any side of the housing, any portion of any side of the housing or at dedicated locations on the surface of the housing. For example, the touch regions may be located on the sides or back surface of the housing, and may even be located at the bezel located at the front surface of the housing. In all of these cases, a large portion of the front surface of the housing is saved for the display so that the viewing area of the hand-held electronic device can be maximized. The touch sensitive surfaces of the housing may take the form of one or more touch panels that are positioned within the housing. The touch sensitive surface may be alternatively or additionally be provided directly by the housing. That is, the touch sensing components may be integrated or incorporated into or disposed underneath the housing such that the housing itself is the touch sensing device (rather than using a separate touch panel). Similarly to a touch screen, a touch sensitive housing recognizes the touch and position of a touch on the surface and a controller of the hand-held electronic device interprets the touch and thereafter performs an action based on the touch event. Touch surfaces are constructed in basically the same manner as a touch screen, except the surfaces need not be substantially transparent.

By way of example, the touch sensitive housing may generally correspond to the touch sensitive housing described in greater detail U. S.

Patent Application 11/115,539, titled "Hand-Held Electronic Device with Multiple Touch Sensing Devices," filed April 26, 2005, published as US 2006/197750 A1.

### C. DISPLAY ACTUATOR

A hand-held multi-functional electronic device may also include a display actuator, which is an input device that mechanically uses the display of the hand-held device to provide inputs into the device (rather than electrically as with a touch screen). The display actuator may be used separately or in combination with the touch screen. The display actuator may include a movable display that causes one or more input signals to be generated when moved. The input signals then can be used to initiate commands, make selections, or control motion in a display.

The movable display may be configured to translate, slide, pivot, and/or rotate relative to the frame. The display is typically movable relative to a frame or housing that movably supports the display in its various positions. In some cases, the display is movably coupled to the frame, and in other cases the frame movably restrains a floating display.

The input signals may be generated by movement indicator(s) that monitor the movements of the display and produces signals indicative of such movements. The detection mechanism may, for example, one or more switches, sensors, encoders, and/or the like. Any suitable mechanical, electrical and/or optical switch, sensor or encoder may be used. For example, tact switches, force sensitive resistors, pressure sensors, proximity sensors, infrared sensors, mechanical or optical encoders and/or the like may be used. The movement indicators may be placed underneath the display or at the sides of the display as appropriate. Alternatively or additionally, these movement indicators may be attached to the display or some component of the display.

An exemplary display actuator is disclosed in U.S. Patent Application No. 11/057,050, titled "display Actuator," filed on February 11, 2005, published as US 2006/181517 A1.

### D. PRESSURE OR FORCE SENSING DEVICES

The multi-functional hand-held electronic device described above may further include force or pressure sensing devices such as a force sensing display or housing.

### 1. Force Sensitive Display

A force sensitive display causes one or more input signals to be generated when pressure is exerted on the display screen of the device. The input signals can be used to initiate commands, make selections, or control motion in a display. Such displays generally provide a slight amount of flex (unnoticeable to the user) so, that any forces exerted thereon can be measured by a force detection arrangement generally provided underneath the display. The force detection arrangement monitors the forces exerted on the display and produces signals indicative thereof. The force detection arrangement may include one or more force sensors such as force sensitive resistors, force sensitive capacitors, load cells, pressure plates, piezoelectric transducers, strain gauges, etc. The force sensors may be attached to the back of the display or to a structural platform located within the housing of the device. When a force is applied to the display, it is transmitted through the display to the force sensor located underneath the display.

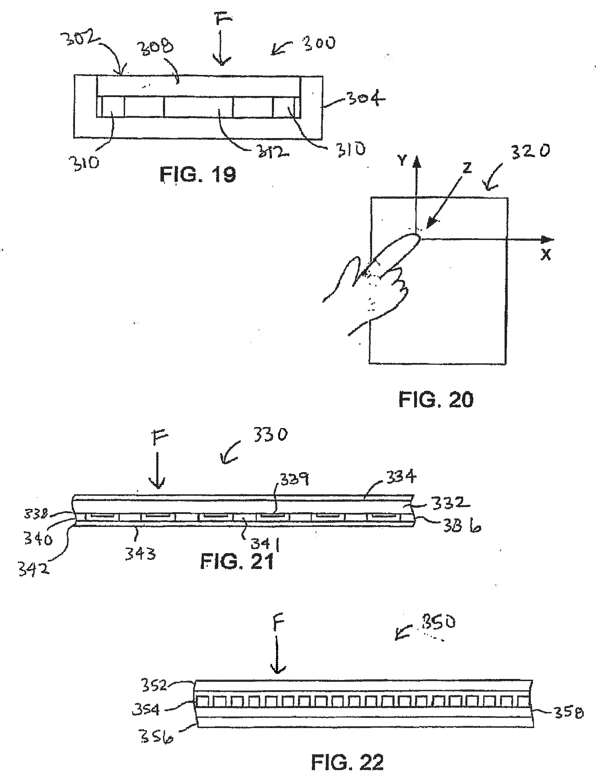

Fig. 19 is a side elevation view, in cross section, of a hand-held device 300 incorporating a force sensitive display 302. The force sensitive display 302 includes a display 308 and one or more force sensors 310 disposed underneath the display 308 (between the display and a structural platform 306). In most cases, the force sensitive display 302 includes a plurality of sensors 310 that are laid out in an array. For example, the sensors 310 may be positioned side by side in rows and columns. The force sensors 310 measure the amount of force being applied to the display and when a desired force threshold is reached a control signal is generated. In some cases, an elastomer 312 is placed between the display and the structural platform to help transmit the force being exerted on the surface of the display to the force sensors disposed below the display.

Force sensing may be provided in conjunction with a touch screen to differentiate between light and hard touches. The determination of whether a touch is a light touch or a hard touch may be made by monitoring the force with the force sensors and comparing the force to a predetermined threshold. When the force threshold is not exceeded, the touch is considered a light touch. When the force threshold is exceeded, the touch is considered a hard touch. Each type of touch may be used to control different aspects of the device. Light touches may be associated with passive events such as navigation (*e.g.,* cursor control scrolling, panning, zoom, rotation, etc.) and hard touches may be associated with active events such as selections or commands (*e.g.,* button click).

Fig. 20 illustrates an input device 320 that combines touch sensing and force sensing devices to provide x, y and z components when touched. The touch sensing device provides position sensing in the x and y directions, and the force sensing device provides force sensing in the z direction. These devices cooperate to output x, y location and z pressure information whenever there is a touch on the touch surface.

Fig. 21 is a side elevation view of an I/O device 330 that combines a display 332 with touch screen 334 and a force sensing mechanism 336. The touch screen 334 provides high resolution touch locations, and the force sensing mechanism 336 provides a measure of where the force is coming from as well the total force. Touch screen 334 is disposed over the display 332, and the force sensing mechanism 336 is disposed below the display 332 although other arrangements are possible.

Force sensing mechanism 336 may also be widely varied. In the illustrated embodiment, the force sensing mechanism 336 is based on capacitance, and more particularly, self capacitance. The illustrated force sensing mechanism 336 is formed from various layers including an electrode layer 338, an elastomer layer 340 and a conductive layer 342.

Electrode layer 338 includes a plurality of spatially separated electrodes 339 that are positioned across the bottom of the display 332. Electrodes 339 are typically positioned in an array of rows and columns although other configurations are possible. Any number of electrodes may be used.

Elastomer layer 340 includes one or more elastic members 341 positioned between the electrode layer 338 and the conductive layer 342. Elastic members 341 allow the display 332 to move inwardly with a limited amount of displacement. In one implementation, elastic members 441 are silicone patches with a thickness of about 0.2 mm.

Conductive layer 342 typically takes the form of a grounded metal plate 343. A capacitive circuit is formed between each of the electrodes 339 and the grounded metal plate 343. When a user pushes down on the display 332, the force being exerted thereon causes the display 332 to displace inwardly against the elastic members 341 compressing the elastic members. This causes a change in the capacitance between the electrodes 339 and the metal plate 343. This change in capacitance is sensed by a control circuit operatively coupled to each of the electrodes 339. Capacitance sensing circuits are disclosed in the various incorporated references.

Fig. 22 is a side elevation view of an input device 350 that may be positioned over a display. The input device 350 combines touch sensing and force sensing into a single device. In this embodiment, both the touch sensing and force sensing is provided by mutual capacitance. As shown, the input device 350 is formed from various layers including a top drive layer 352, a middle sense layer 354, and a bottom drive layer 356. Furthermore, the middle sense layer 354 is positioned on an elastomer layer 358 disposed between the middle sense layer 354 and the bottom drive layer 356. The top and bottom drive layers 353 and 356 include a plurality of spatially separated lines in rows and the middle sense layer 354 includes a plurality of spatially separated lines in columns. The top and middle layers 352 and 354 therefore form a grid, and the bottom and middle layers 356 and 354 form a grid.

During operation, the lines on the top layer 352 are scanned, and thereafter the lines on the bottom layer 356 are scanned (or vice versa). When there is a touch, the mutual capacitance measured between the top drive layer 352 and the middle sense layer 354 provide the x and y location of the touch. In addition, the mutual capacitance measured between the bottom drive layer 356 and the middle sense layer 354 provide the amount of force of the touch. This particular arrangement provides a full image of force superimposed on a full image of touch. The input device including the touch layers and the force layers may be operated similarly to the methods described in U.S. Patent Application No.: 10/840,862, titled "Multipoint Touch Screen," filed on May 6, 2004, published as US 2006/097991 A1.

### 2. Force Sensitive Housing

The hand-held device may also include a force sensitive housing. The force sensitive housing provides inputs when forces are applied to the housing of the hand-held device. A force sensitive housing is similar to a force sensitive screen in that. The housing provides a slight amount of flex (possibly unnoticeable to the user) so that any forces exerted thereon can be distributed to a force detection arrangement located within the housing. The force detection arrangement monitors the forces on the housing and produces signals indicative thereof. As with the force sensitive display discussed above, the force detection mechanism may include one or more force sensors disposed with in the housing such as force sensitive resistors, force sensitive capacitors, load cells, pressure plates, piezoelectric transducers, strain gauges and/or the like. When a force is applied to the housing (squeezing or pushing on the housing), it is transmitted through the housing to the force sensor located within the housing.

The force sensitive portions of the housing may be located on any surface of the housing, any side of the housing, any portion of any side of the housing or at dedicated locations on the surface of the housing. The sides of the housing are ideal places for implementing a squeeze feature. This is because the users fingers are typically positioned on one side of the device and thumb on the other and therefore the hand may easily squeeze the sides via a pinching action. Because it is so convenient to activate the squeeze feature, special care must be taken when designing the squeeze feature so that it will not be accidentally activate during normal use. Thus the device needs to be able to differentiate between light and hard squeezes. If the squeeze feature is implemented using force sensitive resistors (FSRs) which exhibit, a decrease in resistance with an increase in force applied to the active surface a comparator circuit can be used to output a signal to indicate activation when a preset force threshold is reached.

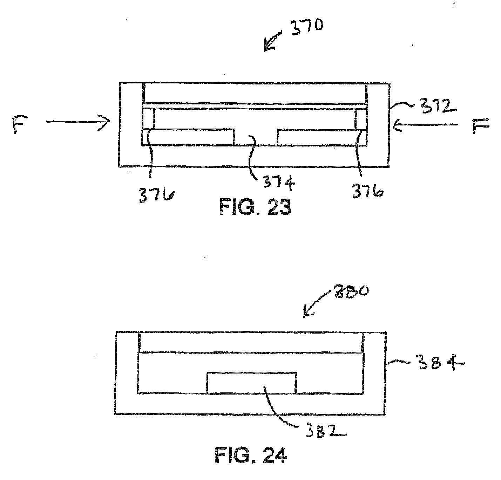

Fig. 23 is a side view, in cross section, of a hand-held device 370 that incorporates a squeeze feature. As shown, the device 370 includes a housing 372 and a support platform 374 inside the housing 372. Between the support platform 374 and the inner surface of the housing 372 are a pair of force sensors 376. When a force is applied to the housing 372 as for example by the pinching nature of the hand, the housing 372 flexes inwardly under the pressure. This causes the force sensors 376 to be sandwiched between the housing 372 and the support platform 374. The force sensors 376 measure the amount of force being exerted and when a desired force threshold is reached, the force sensors 376 generate a control signal. For example, as a result of being sandwiched, a force resistive sensor may exhibit a reduced resistance and when a desired threshold is reached, a control signal is generated.

The force sensitive housing may be is provided in conjunction with a touch sensitive housing as discussed above.

### E. MOTION ACTUATED INPUT DEVICE

The hand-held electronic device may also include a motion actuated input device. The motion actuated input device provides inputs when the hand-held device is in motion or is placed in a certain orientation. A motion actuated input device typically includes a motion sensor, such as an accelerometer, that monitors the motion of the device along the x, y, and/or z axis and produces signals indicative thereof. The motion sensor may, for example, include an accelerometer. Alternatively, the motion sensor could be an orientation sensor, such as an electronic compass, that allows the device to determine its orientation in a generally horizontal plane. The motion sensors may be attached to the housing or to some other structural component located within the housing of the device. When motion is applied to the device (gesturing, shaking, hand waving, etc.), it is transmitted through the housing to the motion sensor.

Because motion sensors typically measure all motion, not just intended motion, the intended motion information typically must be separated from the other motion information to produce an accurate command signal. For example, large scale movements such as shaking the device will produce primarily low frequency information. Conversely, small scale movements, such as vibrations, primarily produce high frequency information. The high frequency information can be filtered out thereby leaving only low frequency information indicative of the large scale movements (*e.g.,* shaking). The filtered information can then be converted into a control signal.

Fig. 24 is a side view, in cross section, of a hand-held electronic device 380. The hand-held device 380 includes an accelerometer 382 that is attached to a housing 384 of the hand-held device 380. When the device 380 is moved about by the user, the accelerometer 382 recognizes the motion and a controller of the hand-held electronic device 380 interprets the motion and thereafter performs an action based on the motion event.

### F. MECHANICAL ACTUATORS

While one would like to eliminate all surface mounted actuators such as buttons and wheels, it is sometimes impractical. Therefore the hand-held device may include some number of surface mounted actuators. Preferably, these actuators are generic to each of the integrated devices. That is, their meaning is the same regardless of what device functionality is activated. It is also preferred that the surface mounted actuators be placed on surfaces other than the front surface, which houses the viewing region of the display, although this is not required.

One particularly useful mechanical actuator is a hold switch. The hold switch may be configured to activate and deactivate the primary input means, *e.g.,* the touch screen. This permits a user to prevent unwanted entries, for example, when the device is stored inside a user's pocket. In one implementation, the hold switch may be placed on the top surface out of the way of the grasping hand, but in a position for easy access (as opposed to the bottom surface). The hold switch can not only deactivate the touch screen but also mechanical actuators and other input and other input devices.

Another particularly useful mechanical actuator is a power switch. When the power switch is turned on, the device is powered up and ready to go. When the power switch is turned off, the device is shut down. In one implementation, the power switch may be placed on the top surface out of the way of the grasping hand, but in a position for easy access (as opposed to the bottom surface).

Another useful mechanical actuator is a navigation pad. The navigation pad is typically included with many hand-held devices. The functionality of the navigation pad may be changed according to the current operating mode of the device. In the case of a music player, for example, the directional keys may be assigned, play/pause, next, previous, and volume up and down. Other assignable buttons may also be included on the device.

Still another useful mechanical actuator is a switching actuator. The switching actuator may be configured to change the functionality of the device, *i*.*e*., by activating the switching actuator the functionality or state of the device switches from one mode to another. The switching actuator may be widely varied.

For example, the switching actuator may be a dial or wheel. By incrementally rotating the wheel, the device is incrementally switched from one device to the other (generally in some predetermined order). A full rotation of each device generally cycles through the entire group of integrated devices. The wheel or dial may for example operate like a scroll wheel. Although the placement may be widely varied, the switching wheel may be placed in the upper region of the sides of the device. By placing the wheel here, a users thumb may be used to easily rotate the wheel. For example, the users thumb may be extended from the grasping action so that the wheel can be rotated.

Alternatively, the switching actuator may be a button. By repetitively pressing on the button, the device is switched from one device to another (generally in some predetermined order). Although the placement may be widely varied, the switching button may be placed in the upper region of the sides of the device. By placing the button here, a users thumb or index finger may be used to easily press the button.

The hand-held device may also include any commercially available touch pad. Several examples of touch pads may be found in U.S. Patent Application No.: 10/188,182, titled "Touch Pad for Handheld Device," filed on July 1, 2002, published as US 2003/076306 A1, U.S. Patent Application No.: 10/722,948, titled "Touch Pad for Handheld Device," filed on November 25, 2003, published as US 2005/110768 A1, and U.S. Patent Application No.: 10/643,256, titled "Movable Touch Pad with Added Functionality," filed on August 18, 2003, published as US 2005/052425 A1.

In another embodiment, the hand-held device may include a scroll wheel. Scroll wheels can be used in each functionality to scroll through a window.

### G. MICROPHONE

The hand-held device may also include a microphone that picks-up audio sounds. The microphone may be used in conjunction with a cell phone to transmit sounds, such as the user's voice. The microphone may also be used to record sounds or enter voice commands into the hand-held device. For example, using voice recognition software, the hand-held device may be able to recognize voice commands and generated control signals associated therewith. The microphone may be placed in the bottom surface of the hand-held device or possible in the front lower bezel. This particular configuration is well suited for picking up a user's voice during a phone call.

### H. IMAGE SENSOR

A hand-held electronic device may also include an image sensor and lens related components so that the hand-held device can operate like a camera. The image sensor may, for example, include a charge coupled device (CCD) camera.

### I. INPUT DEVICE FUNCTIONALITY

### 1. TOUCH GESTURES

A hand-held electronic device may be designed to recognize touch gestures applied to a touch screen and/or touch sensitive surface of the housing and thereby control aspects of the hand-held electronic device. Gestures are a stylized interaction with an input device that is mapped to one or more specific computing operations. The gestures may be made through various hand and finger motions. Gestures generally comprise a contact chord *e.g.,* one or more fingers, and a motion associated with the chord. Alternatively or additionally, the gestures may be made with a stylus. In all of these cases, the input device *i.e.,* touch screen and/or touch sensitive surface) receive the gestures and a controller of the hand-held electronic device executes instructions to carry out operations associated with the gestures. The hand-held electronic device may include a touch gesture operational program, which may be part of the operating system or a separate application. The gesture operation program generally includes a set of instructions that recognizes the occurrence of gestures and informs one or more software agents of the gestures and/or what action(s) to take in response to the gestures. For example, gestures that can be used are disclosed in greater detail in U.S. Patent Application No: 10/903,964, titled "Gestures for Touch Sensitive Input Devices," filed on July 30, 2004, published as US 2006/026521 A1, and U.S. Patent Application No.: 11/038,590, titled "Mode-Based Graphical User Interfaces for Touch Sensitive Input Devices," filed on January 18, 2005, published as US 2006/026535 A1.

### 2. 3-D SPATIAL GESTURES

In accordance with one embodiment, the hand-held electronic device may be designed to recognize 3-D spatial gestures measured by an accelerometer and to control aspects of the hand-held electronic device based on the 3-D spatial gestures. Spatial gestures are stylized motions of the device itself that are mapped to one or more specific computing operations.. The 3-D spatial gestures may be made through various hand and arm motions, such as for example shaking, waving and the like. The accelerometer measures the motion related to the 3-D spatial gestures and a controller recognizes the motion as a 3-D spatial gesture and thereafter executes instructions to carry out operations associated with the 3-D spatial gestures. The hand-held electronic device may include a 3-D spatial gesture operational program, which may be part of the operating system or a separate application. The gesture operation program generally includes a set of instructions that recognizes the occurrence of gestures and informs one or more software agents of the gestures and/or what action(s) to take in response to the gestures.

One exemplary 3-D gesture is shaking the device. Shaking can cause the hand-held device causes the device to shift between modes or states. Alternatively, shaking the hand-held device can cause a selection event to occur. For example, in the case of a media player, shaking the device may cause the device to randomly select a picture or song in group of pictures or songs. Alternatively, shaking the device may cause the device to select the next picture or song in a sequence of songs.

Other gestures may include translating or rotating the device. Translating the hand-held device (while it is face up) from side to side may be used to initiate panning or scrolling in the device, or moving the device up and down (while it is face up) may be used to initiate zooming. Rotating the device may be used to cause the device to change modes or states. In some cases, for example, the orientation of the device may correspond to a particular mode. For example, a first mode may be associated with 0 degrees, a second mode may be associated with 90 degrees, a third mode may be associated with 180 degrees and a fourth mode may be associated with 270 degrees. In all these cases, the device can be configured to keep the displayed portion upright as the device is turned. That is, it maintains an upright image no matter what orientation the device is in.

The 3-D spatial gestures may even be based on more complex motions such as sign language, writing motions, etc.

### 3. PERFORM ACTION BASED ON MULTIPLE INPUTS

Because the device may have multiple input modes, the hand-held device may be configured to receive simultaneous inputs from different inputs devices, and perform actions based on the multiple simultaneous inputs. The inputs that may be combined to produce new commands may be selected from voice, 2-D touch gestures, 3-D spatial gestures, actuators, etc. For example, this feature may be helpful when making calls via voice selection. A caller may verbalize "TOM," which causes the device to dial "TOM" phone number. If "TOM" has multiple phone numbers, a user may combine the verbal command "TOM" with a 3-D spatial gesture such as shaking to select Tom's second phone number. Various other possibilities will be appreciated by those skilled in the art.

### 4. DIFFERENTIATING BETWEEN LIGHT AND HARD TOUCHES

As noted above, force sensing in conjunction with touch sensing facilitates two distinct types of interactions, light touches and hard touches. Light touches may be used to perform passive actions such as navigating through content and content manipulation generally without causing a major event to occur. Examples of passive events include moving a cursor, scrolling, panning, etc. Hard touch interactions may be used to select on screen buttons or initiate commands (*e.g.*, causes a significant change to occur).

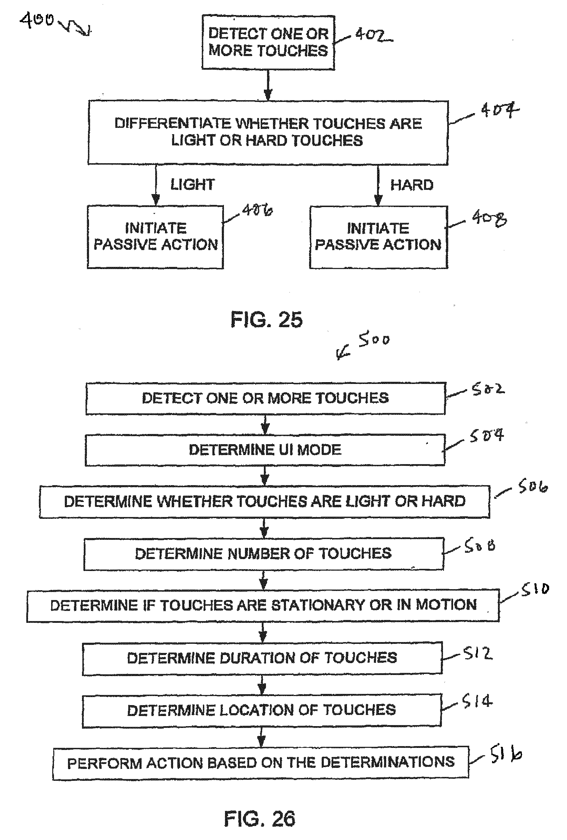

Fig. 25 is a diagram of a touch method 400for implementing this technique. The method 400 begins at block 402 where one or more touches are detected. The touches include not only x any y components but also z components. The x and y components may be supplied by a touch sensing device such as touch screen, touch pad, or touch housing. The z component may be provided by force sensors or display actuators located behind the touch surface of the touch sensing device.

Following block 402, the method proceeds to block 404 where a determination is made as to whether the touch is a light or hard touch. The determination is generally based on the force or pressure of the touch (z component). For example, if the force of the touch is smaller than a predetermined threshold then the touch is considered a light touch and if the force of the touch is larger than the predetermined threshold then the touch is considered a hard touch. If it is determined that the touch is a light touch, the method proceeds to block 406 where a passive action associated with the touch is initiated. If it is determined that the touch is hard touch, an active action associated with the touch is performed (block 408).

The touch method may additionally include a block where the one or more touches are classified as a primary touch or a secondary touch. Primary touches are touches that are intended to cause an action while secondary touches are touches that are not intended to cause an action. Gestures are examples of primary touches while a thumb positioned over the touch area to hold the device is an example of a secondary touch. Once the touches are classified as primary or secondary, the secondary touches are filtered out, and the determination of whether a touch is a light or hard touch is made with the primary touches.

### 5. EXAMPLE OF A NEW TOUCH VOCABULARY

The z pressure exerted on a touch sensing device can be combined with the x and y locations of the touch to form a new touch vocabulary. As should be appreciated, up to this point touch vocabularies have only included x and y locations, not z pressure. A proposed touch vocabulary includes variety of variables including the UI mode, the force of the touch (*e.g.*, light or hard), the number of fingers used, whether or not there is any movement during the touch, the duration of the touch, and the touch location, all or some of which can be combined to form a variety of behaviors and user feedback.

The UI mode is generally related to the mode or state of the device. Each device includes a variety of states and each state may require a different UI mode. A media player (a mode) may, for example, Include a set of hierarchal layers (states) with each layer requiring a different UI.

As noted above, the force of the touch may, for example, be described as light or hard. A light touch may occur when a user lightly touches the surface of the touch surface, *i.e.,* the finger hovers on top of the surface and is primarily moved in the x and y directions. A hard touch may occur when a user presses on the touch surface with a certain amount of force, *i.e.,* the finger is primarily moved in the z direction against the touch surface.

Motion during the touch is used to describe whether the finger has remained stationary during a touch event or has substantially moved in the X-Y plane (*e.g.,* translation, rotation, etc.). The motion may be described as none at all or a swipe or twist in some particular direction. By way of example, the swipe may be up, down, right, left, or some combination thereof, and the twist may be clockwise or counterclockwise.

Duration is defined as the amount of time the finger stays at any one point. Duration may be variable or it may include states such as short and long. The touch location may be a random point or a specific location such as an onscreen button.

Fig. 26 is an additional touch method 500 implementing this technique. The method begins at block 502 when one or more touches are detected. Thereafter, in block 504, the UI mode is determined. In block 506, a determination is made as to whether the touches are light touches or hard touches. Alternatively, blocks 502 and 504 could be reversed, effectively resulting in an instance of the touch method for each mode. In block 508, the number of distinct touches (*e.g.,* fingers) is determined. In block 510, a determination is made as to whether the touches are stationary or in motion. In block 512, the duration of the touches is determined. In block 514, the locations of the touches are determined. Following blocks 502-514, the method proceeds to block 516 where an action is performed based on the UI mode, the pressure of the touch, the number of touches, whether or not the touch is moving, the duration of the touch, and the touch location. The actions may be passive or active depending on the values of each characteristic.

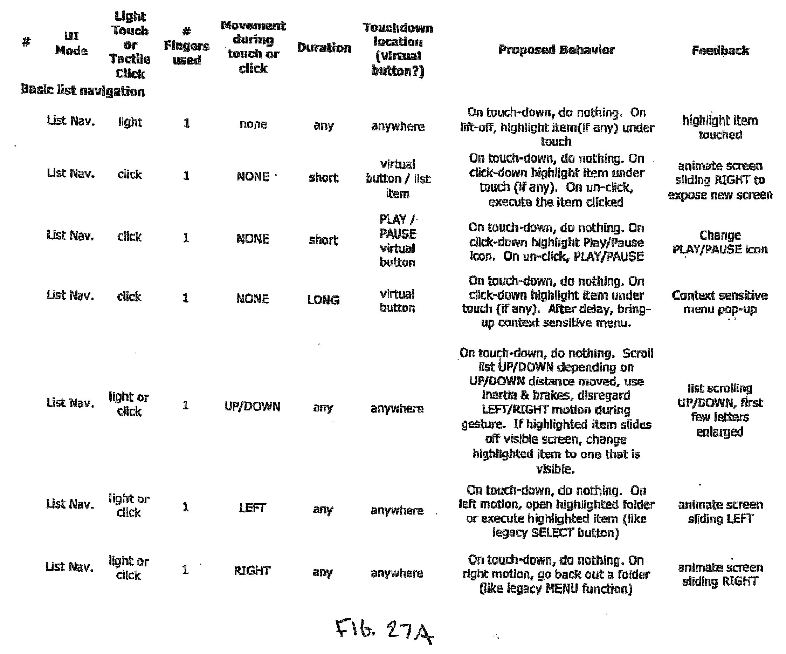

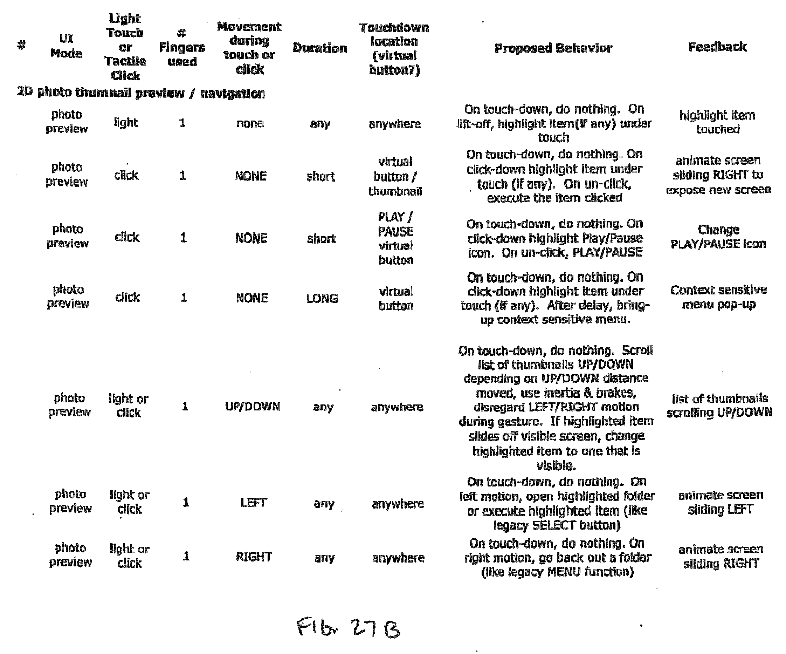

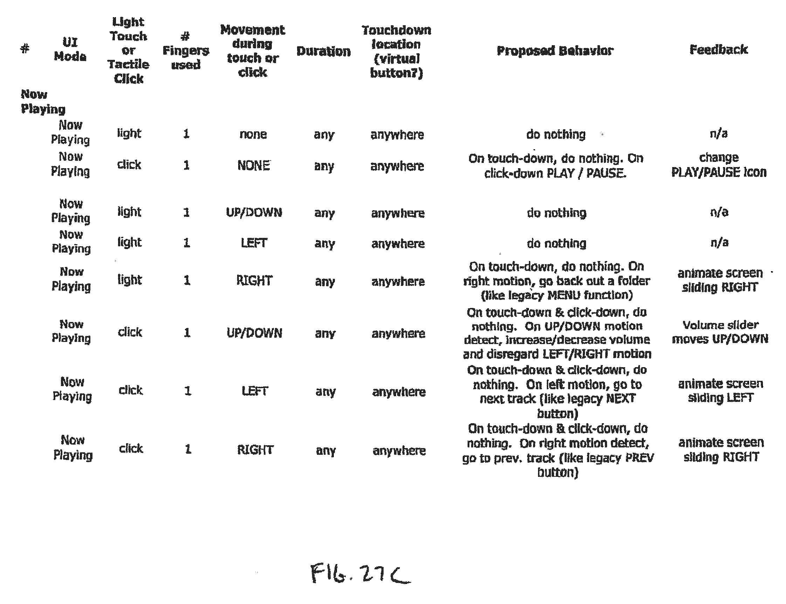

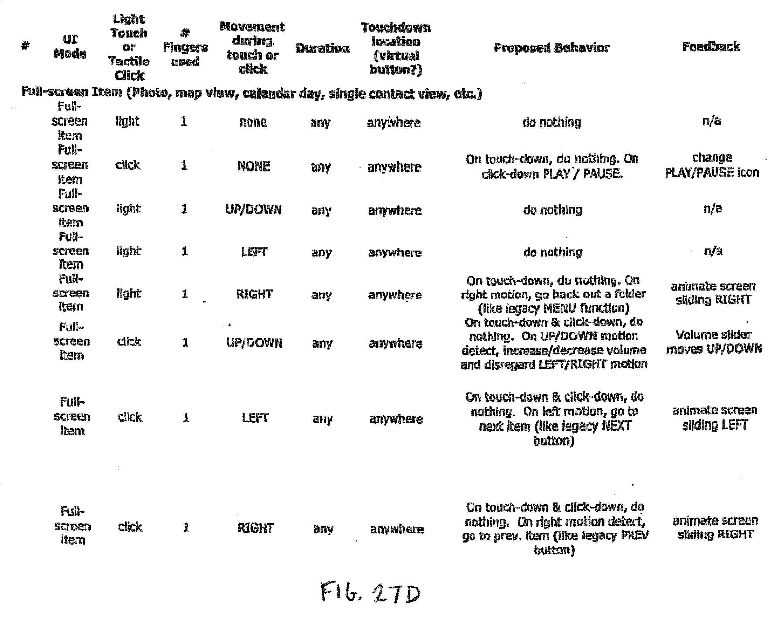

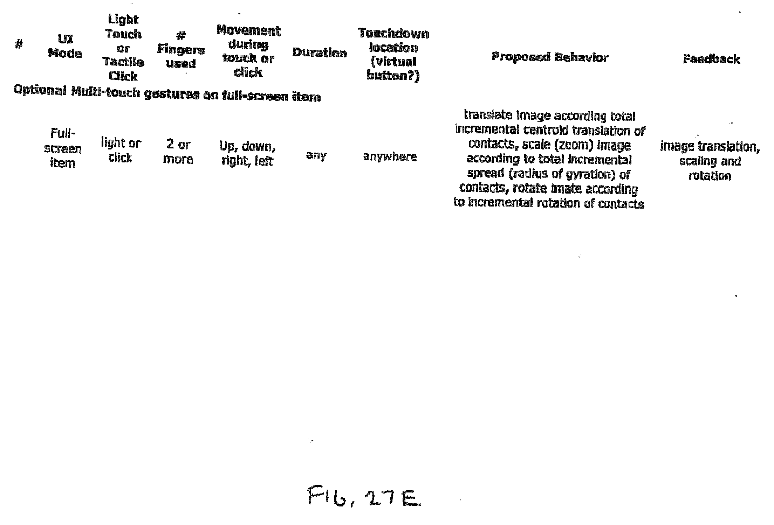

One example of a touch vocabulary associated with a music player is shown in Figs. 27A-E.

### V. OUTPUT DEVICES

### A. DISPLAY

The principle output of a hand-held electronic device is typically a display. The display provides visual information in the form of text, characters or graphics. The display is usually a flat panel device although other types of displays may be used. The display may be a liquid crystal display (LCD) such as a character LCD that is capable of presenting text and symbols or a graphical LCD that is capable of presenting images, video, and graphical user interfaces (GUI). Alternatively, the display may correspond to a display based on organic light emitting diodes (OLED), or a display that is based on electronic inks.

Preferably, the display may be configured to substantially fill the front surface of the housing. The display may extend from one edge of the housing to the opposite edge of the housing, the housing may include a small bezel that surrounds the edges of the display. In either case, the display makes up a substantial portion of the front surface of the hand-held electronic device, thereby eliminating any space for buttons or switches associated with a conventional user interface.

As mentioned above, besides outputting visual information, the display may also act like an input device. For example, a touch screen may be positioned over the display, and/or sensors may be disposed underneath the display to sense when the device is pressed or otherwise moved. In most cases, the small form factor of hand-held devices requires central placement of the input interfaces to permit operation while being carried around and used by the hand. The display region provides a central location, which can be accessed by both the left and right hands.

The display region may be formed by more than one display. For example, the display region may be formed by a pair of displays that are side by side or one on top of the other. A first display may be used to present the standard screen and a second display may be used to present the control screen as described above with reference to Figs. 5-8. Furthermore, a first display may be a conventional display while the second display may be a display actuator. Moreover, a first display may comprise of a first type and a second display may be of a second type. For example, the first display may be an LCD while the second display may be a display based on electronic inks.

The decision to use different types may be based on the fact that one of the displays may be dedicated to a standard viewing area while another may be dedicated to a control area. Because these two areas require different resolutions, a higher resolution screen may be used in the standard area while a lower resolution screen may be used in the control area. Alternatively or additionally, one of the displays may be selected to reduce battery consumption especially in the control area where lower resolution is acceptable. In some cases, although two different displays are used, the images displayed thereon may be combined to form a single unified image.

### B. SPEAKER

A hand-held device may also include a speaker. Speakers are components that accept electronic signals representing audio information from an amplifier and converts them into sound waves. The speakers may be used to listen to music in conjunction with a music player functionality or to listen to an incoming call in conjunction with a cell phone functionality. The speaker may be placed on the top surface or possible on the front top bezel of the hand-held device. This arrangement works particularly well when the device is used as a cell phone.

### C. INDICATOR (LED)

A hand-held device may also include one or more indicators that provide user feedback or indicate events associated with the device. The events may relate to signals, conditions or status of the device. For example, the indicators provide status of battery life or alert a user when there is an incoming call. The indicators, which include light sources such as light emitting diodes (LED), are typically illuminated when an event occurs, and not illuminated when the event is stopped. Furthermore, the indicator may turn on and off (blink) or cycle with increasing or decreasing intensity, and in some cases may even change colors in order to provide more detailed information about the event that is being monitored.

The indicators may be conventional indicators that typically include a small clear plastic insert, which is located in front of the LED, and which is inserted within an opening in the housing thus causing it to exist at the surface of the housing. The LED itself may also be placed in the opening in the housing rather than using an insert. Alternatively, the indicator can be configured not to break the surface of the housing. In this configuration, the light source is disposed entirely inside the housing, and is configured to illuminate a portion of the housing thereby causing the housing to change its appearance, *i.e.,* change its color.

### D. AUDIO/TACTILE FEEDBACK DEVICES

The hand-held device may include speakers or buzzers to give audio feedback to the user. These may work similarly to the indicators described above, or they may be used to enhance the feel of actuating a GUI element such as a soft button or scroll wheel. For example, the speaker may be configured to output a "clicking" noise when a user presses on a virtual button, or rotates a virtual scroll wheel. This particular feature enhances the user experience and makes the virtual UI feel more like a physical UI.

The hand-held device may also include a haptics mechanism. Haptics is the science of applying tactile sensation and control to interaction with computer applications. Haptics essentially allows a user to feel information, *i.e.,* signals are sent to the hand. The haptics mechanisms may be widely varied. They may include motors, vibrators, electromagnets, etc., all of which are capable of providing force feedback in the form of vibration or shaking. The haptics mechanisms may work similarly to the indicators described above (alert), or they may be used to enhance the feel of actuating a GUI element such as a soft button or scroll wheel. For example, the haptics mechanism may be configured to vibrate when a user presses on a virtual button, or rotates a virtual scroll wheel. This particular feature enhances the users experience and makes the virtual UI feel more like a physical UI. Haptics may also be used simultaneously with onscreen actions. For example, during movies or game playing, the haptics mechanism can simulate the action being displayed. For example, the haptics mechanism may provide force feedback in the form of vibration when a car explodes during a movie or game.

In cases where haptics is used to enhance the feel of actuating a GUI element, such as a soft button or scroll wheel, the haptics mechanism may be located in the region of the display and further underneath the display so as to provide force feedback directly underneath the user action. In fact, multiple haptics mechanisms may be used regionally across the display to further enhance the feel. It is generally believed that the closer the vibration is to the user action, the greater the haptics effect. In one implementation, the haptics mechanisms are spaced out in an array underneath the display. That is, they are spatially separated and placed at different locations. By way of example, they may be positioned in a 2x2, 2x4, 4x4, 4x8, 8x8 array and so on underneath the display.

Audio and/or tactile feedback may be used to alert a user that a user input has been made. For example, in response to touching a virtual button on the GUI, the haptics may provide force feedback in the form of vibration and the speaker may provide audio feedback in the form of a click. The tactile audio feedback can be used in conjunction with an input event including touch events, motion events, squeeze events. The feedback may provide information so that the user knows that they actually implemented an input (simulates the audio and tactile feel of a button or switch). In one implementation, the feedback is tied to the level of force being applied to the force sensing devices. For example, when a certain force threshold is reached, the audio feedback device may create a "click" on the press and a "clock" on the release. The force threshold used may be similar to the threshold used to determine whether a touch is a light or hard touch. The "click" and "clock" may be used to simulate a button click when a hard touch is made.

### VI. COMMUNICATION DEVICES

### A. WIRED

The hand-held device may also include one or more connectors for receiving and transmitting data to and from the device. By way of example, the device may include one or more audio jacks, video jacks, data ports, docking ports, etc. The hand-held device may also include one or more connectors for receiving and transmitting power to and from the hand-held device.

The hand-held device may include a headphone/microphone jack and a data port. The jack is capable of receiving a speaker and/or microphone plug so that audio may be input to and output from the device. The data port is capable of receiving a data plug/cable assembly configured for transmitting and receiving data to and from a host device, such as a general purpose computer (*e.g.*, desktop computer, portable computer). For example, the data port may be used to upload or download data to and from the hand-held device. Such data may include songs and play lists, audio books, e-books, photos, address books, documents, appointments, etc. into the hand-held device. The data port may be a PS/2 port, serial port, parallel port, network interface port, USB port, Firewire port etc. The hand-held device may also include a power port that receives a power plug/cable assembly configured for delivering powering to the hand-held device. In some cases, the data port may serve as both a data and power port by employing either standard or proprietary connectors.

### B. WIRELESS

To send and receive data wirelessly, the device generally requires a transmitter, a receiver (or a transceiver) and some sort of antenna. The wireless communication link may correspond to Bluetooth, WiFi (802.11), IR (infrared), etc. The antenna may be fully contained within the device or they may extend outside the device. The antenna may take a variety of forms depending on the frequency to be used, etc. For example be a rugged rubber duck that consists of a coiled up element encased in rubber. Alternatively, the antenna may be printed on a circuit board within the device.

The hand-held device may also include a radio transceiver for communications via a cellular network or a GPS receiver.

### C. CHANGE UI BASED ON RECEIVED COMMUNICATION SIGNALS

A hand-held electronic device may be configured to actively look for signals in the surrounding environment, and change its mode based on the signal. That is, the device tries to match the mode with the signal. If the device receives a phone signal over the cellular network, the device may turn into a phone, i.e., the phone mode is activated or brought forward relative to the other modes. If a device receives an email, the device may turn into an email terminal. As another example, when a user walks into a home theater room, the device may sense signals from the media control unit and turn itself into a remote control including functionality to control the various devices of the home theater (TV, amp, DVD, lighting). In other cases, the device may sense signals, which are being broadcast in physical stores, and turn itself into a device that is well suited for that store. For example, in a bank, the device may change into a calculator or bring a money program into view, or in a grocery store, the device may turn into a money payment device or bring a grocery list into view.

### VII. OTHER COMPONENTS OF HAND-HELD DEVICE

The hand held device may additionally include one or more of the following hardware components: a controller (*e.g*., microprocessor, DSP, A/D, D/A, converters, codes), memory (*e,g*., RAM, ROM, solid state (flash), hard disk (micro-drive)), storage (SD card slots, mini-DVD), battery (*e.g*., lithium ion), etc.

### VIII. OVERALL BLOCK DIAGRAM

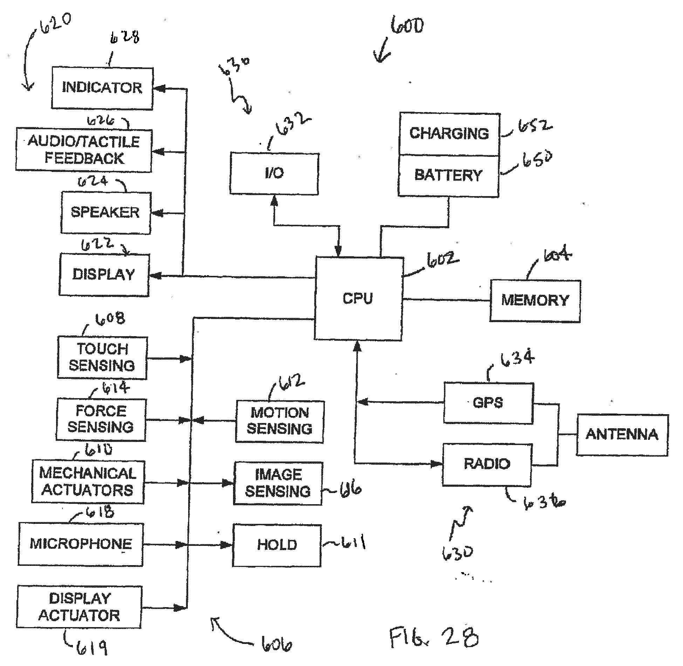

Fig. 28 is a block diagram of an exemplary hand-held device 600. The hand-held device 600 typically includes a controller 602 (*e.g.,* CPU) configured to execute instructions and to carry out operations associated with the hand-held device. For example, using instructions retrieved for example from memory, the controller 602 may control the reception and manipulation of input and output data between components of the hand-held device 600. The controller 602 can be implemented on a single chip, multiple chips or multiple electrical components. For example, various architectures can be used for the controller 602, including dedicated or embedded processor, single purpose processor, controller, ASIC, etc. By way of example, the controller may include microprocessors, DSP, A/D converters, D/A converters, compression, decompression, etc.

In most cases, the controller 602 together with an operating system operates to execute computer code and produce and use data. The operating system may correspond to well known operating systems such as OS/2, DOS, Unix, Linux, and Palm OS, or alternatively to special purpose operating system, such as those used for limited purpose appliance-type devices. The operating system, other computer code and data may reside within a memory block 604 that is operatively coupled to the controller 602. Memory block 604 generally provides a place to store computer code and data that are used by the hand-held device. By way of example, the memory block 604 may include read-only memory (ROM), random-access memory (RAM), hard disk drive (*e,g.,* a micro drive), flash memory, etc. In conjunction with the memory block 604, the hand-held device may include a removable storage device such as an optical disc player that receives and plays DVDs, or card slots for receiving mediums such as memory cards (or memory sticks). Because the form factor of the hand-held device is small, the optical drive may only be configured for mini DVDs.

The hand-held device 600 also includes various input devices 606 that are operatively coupled to the controller 602. The input devices 606 are configured to transfer data from the outside world into the hand-held device 600. As shown, the input devices 606 may correspond to both data entry mechanisms and data capture mechanisms. In particular, the input devices 606 may include touch sensing devices 608 such as touch screens, touch pads and touch sensing surfaces, mechanical actuators 610 such as button or wheels or hold switches (611), motion sensing devices 612 such as accelerometers, force sensing devices 614 such as force sensitive displays and housings, image sensors 616, and microphones 618. The input devices 606 may also include a clickable display actuator 619.

The hand-held device 600 also includes various output devices 620 that are operatively coupled to the controller 602. The output devices 620 are configured to transfer data from the hand-held device 600 to the outside world. The output devices 620 may include a display 622 such as an LCD, speakers or jacks 624, audio/tactile feedback devices 626, light indicators 628, and the like

The hand-held device 600 also includes various communication devices 630 that are operatively coupled to the controller 602. The communication devices 630 may, for example, include both wired and wireless connectivity selected from I/O ports 632 such as IR, USB, or Firewire ports, GPS receiver 634, and a radio receiver 636.

The hand-held device 600 also includes a battery 650 and possibly a charging system 652. The battery may be charged through a transformer and power cord or through a host device or through a docking station. In the cases of the docking station, the charging may be transmitted through electrical ports or possibly through an inductance charging means that does not require a physical electrical connection to be made.

The various aspects, features, embodiments or implementations of the invention described above can be used alone or in various combinations. The methods of this invention can be implemented by software, hardware or a combination of hardware and software. The invention can also be embodied as computer readable code on a computer readable medium. The computer readable medium is any data storage device that can store data which can thereafter be read by a computer system, including both transfer and non-transfer devices as defined above. Examples of the computer readable medium include read-only memory, random access memory, CD-ROMs, flash memory cards, DVDs, magnetic tape, optical data storage devices, and carrier waves. The computer readable medium can also be distributed over network-coupled computer systems so that the computer readable code is stored and executed in a distributed fashion.

While this invention has been described in terms of several preferred embodiments, there are alterations, permutations, and equivalents, which fall within the scope of this invention. It should also be noted that there are many alternative ways of implementing the methods and apparatuses of the present invention.

## Claims

1. A hand-held electronic device (300) comprising:
a multi-touch input surface (320, 330, 350) configured for generating a plurality of touch signals when a plurality of concurrent touch inputs are received at the multi-touch input surface at a plurality of touch locations;
**characterized by**:
a force sensing mechanism (336) including a plurality of force sensors (310), the plurality of force sensors configured for generating a plurality of force signals when the plurality of concurrent touch inputs are received at the multi-touch input surface at the plurality of touch locations; and
a processing unit (602) capable of receiving the plurality of touch signals and the plurality of force signals and determining from those signals the plurality of touch locations and a force at each of the plurality of touch locations.

2. The hand-held electronic device of claim 1, the plurality of force signals comprising force information associated with an amount of force being applied to the force sensing mechanism.

3. The hand-held electronic device of claim 2, the plurality of touch signals comprising touch information associated with a location of the plurality of touch locations.

4. The hand-held electronic device of claim 3, the processing unit further capable of utilizing the force information and the touch information to generate a force distribution across the plurality of touch locations.

5. The hand-held electronic device of claim 1, wherein
the multi-touch input surface serves as a primary input means necessary to interact with the hand-held electronic device.

6. The hand-held electronic device of claim 5, wherein the hand-held electronic device includes cross-functional physical buttons.

7. The hand-held electronic device of claim 1, wherein the hand-held electronic device is operable to recognize touch gestures applied to the multi-touch input surface, and wherein the touch gestures are used to control aspects of the hand-held electronic device.

8. The hand-held electronic device of claim 1, further comprising a display device (308, 332, 622) operatively coupled to the processing unit and configured to present a user interface, the display device integral with the multi-touch input surface to form a multi-point touch screen.

9. A method for sensing touch and force, comprising:
generating a plurality of touch signals from a plurality of touch sensors when a plurality of concurrent touch inputs are received at a multi-touch input surface at a plurality of touch locations;
generating a plurality of force signals from a plurality of force sensors when the plurality of concurrent touch inputs are received at the multi-touch input surface at the plurality of touch locations; and
determining, from the plurality of touch signals and the plurality of force signals, coordinates of the plurality of touch locations and a force at each of the plurality of touch locations.

10. The method of claim 9, the plurality of force signals comprising force information associated with an amount of force being applied to the force sensing mechanism.

11. The method of claim 10, the plurality of touch signals comprising touch information associated with a location of the plurality of touch locations.

12. The method of claim 11, further comprising utilizing the force information and the touch information to generate a force distribution across the plurality of touch locations.

13. The method of claim 9, further comprising recognizing touch gestures applied to the hand-held electronic device, wherein the touch gestures are used to control aspects of the hand-held electronic device.

## Patentansprüche

1. Handgehaltene elektronische Vorrichtung (300), die aufweist:
eine Mehrfach-Berührungseingabeoberfläche (320, 330, 350), die konfiguriert ist, um eine Vielzahl von Berührungssignalen zu erzeugen, wenn eine Vielzahl von gleichzeitigen Berührungseingaben an der Eingabeoberfläche für Mehrfach-Berührungen empfangen wird an einer Vielzahl von Berührungsorten;
**gekennzeichnet durch**:
einen Krafterfassungsmechanismus (336), der eine Vielzahl von Kraftsensoren (310) umfasst, wobei die Vielzahl von Kraftsensoren konfiguriert ist, um eine Vielzahl von Kraftsignalen zu erzeugen, wenn die Vielzahl von gleichzeitigen Berührungseingaben an der Eingabeoberfläche für Mehrfach-Berührungen an der Vielzahl von Berührungsorten empfangen wird; und
eine Verarbeitungseinheit (602), die in der Lage ist, die Vielzahl von Berührungssignalen und die Vielzahl von Kraftsignalen zu empfangen und aus diesen Signalen die Vielzahl von Berührungsorten und eine Kraft an jedem der Vielzahl von Berührungsorten zu bestimmen.

2. Handgehaltene elektronische Vorrichtung gemäß Anspruch 1, wobei die Vielzahl von Kraftsignalen Kraftinformation umfasst, die mit einem Kraftbetrag assoziiert ist, der auf den Krafterfassungsmechanismus aufgebracht wird.

3. Handgehaltene elektronische Vorrichtung gemäß Anspruch 2, wobei die Vielzahl von Berührungssignalen Berührungsinformation umfasst, die mit einem Ort der Vielzahl von Berührungsorten assoziiert ist.

4. Handgehaltene elektronische Vorrichtung gemäß Anspruch 3, wobei die Verarbeitungseinheit weiter in der Lage ist, die Kraftinformation und die Berührungsinformation zu verwenden, um eine Kraftverteilung über die Vielzahl von Berührungsorten zu erzeugen.

5. Handgehaltene elektronische Vorrichtung gemäß Anspruch 1, wobei die Eingabeoberfläche für Mehrfach-Berührungen als eine primäre Eingabeeinrichtung
dient, die notwendig ist, um mit der handgehaltenen elektronischen Vorrichtung zu interagieren.

6. Handgehaltene elektronische Vorrichtung gemäß Anspruch 5, wobei die handgehaltene elektronische Vorrichtung funktionsübergreifende physikalische Tasten umfasst.

7. Handgehaltene elektronische Vorrichtung gemäß Anspruch 1, wobei die handgehaltene elektronische Vorrichtung betreibbar ist, um Berührungsgesten zu erkennen, die auf die Eingabeoberfläche für Mehrfach-Berührungen aufgebracht werden, und wobei die Berührungsgesten verwendet werden, um Aspekte der handgehaltenen elektronischen Vorrichtung zu steuern.

8. Handgehaltene elektronische Vorrichtung gemäß Anspruch 1, die weiter eine Anzeigevorrichtung (308, 332, 622) umfasst, die operativ mit der Verarbeitungseinheit gekoppelt ist und konfiguriert ist, um eine Benutzeroberfläche darzustellen, wobei die Anzeigevorrichtung integral mit der Eingabeoberfläche für Mehrfach-Berührungen ist, um einen Berührungsbildschirm für mehrfache Punkte zu bilden.

9. Verfahren zum Erfassen von Berührung und Kraft, das aufweist:
Erzeugen einer Vielzahl von Berührungssignalen aus einer Vielzahl von Berührungssensoren, wenn eine Vielzahl von gleichzeitigen Berührungseingaben an einer Eingabeoberfläche für Mehrfach-Berührung an einer Vielzahl von Berührungsorten empfangen wird;
Erzeugen einer Vielzahl von Kraftsignalen aus einer Vielzahl von Kraftsensoren, wenn die Vielzahl von gleichzeitigen Berührungseingaben an der Eingabeoberfläche für Mehrfach-Berührung an der Vielzahl von Berührungsorten empfangen wird; und
Bestimmen, aus der Vielzahl von Berührungssignalen und der Vielzahl von Kraftsignalen, Koordinaten der Vielzahl von Berührungsorten und eine Kraft an jedem der Vielzahl von Berührungsorten.

10. Verfahren gemäß Anspruch 9, wobei die Vielzahl von Kraftsignalen Kraftinformation aufweist, die mit einem Kraftbetrag assoziiert ist, der auf den krafterfassenden Mechanismus aufgebracht wird.

11. Verfahren gemäß Anspruch 10, wobei die Vielzahl von Berührungssignalen Berührungsinformation aufweist, die mit einem Ort der Vielzahl von Berührungsorten assoziiert ist.

12. Verfahren gemäß Anspruch 11, das weiter Verwenden der Kraftinformation und der Berührungsinformation zum Erzeugen einer Kraftverteilung über die Vielzahl von Berührungsorten aufweist.

13. Verfahren gemäß Anspruch 9, das weiter aufweist Erkennen von Berührungsgesten, die auf die handgehaltene elektronische Vorrichtung aufgebracht werden, wobei die Berührungsgesten verwendet werden, um Aspekte der handgehaltenen elektronischen Vorrichtung zu steuern.

## Revendications

1. Dispositif électronique portatif (300) comprenant :
une surface d'entrée de touchers multiples (320, 330, 350) configurée pour générer une pluralité de signaux de touchers lorsqu'une pluralité d'entrées de touchers simultanées sont reçues sur la surface d'entrée de touchers multiples à une pluralité d'emplacements de touchers ;
**caractérisée par** :
un mécanisme de détection de force (336) comprenant une pluralité de capteurs de force (310), la pluralité de capteurs de force étant configurée pour générer une pluralité de signaux de force lorsque la pluralité d'entrées de touchers simultanées sont reçues sur la surface d'entrée de touchers multiples à la pluralité d'emplacements de touchers ; et
une unité de traitement (602) capable de recevoir la pluralité de signaux de touchers et la pluralité de signaux de force et déterminer, à partir de ces signaux, la pluralité d'emplacements de touchers et une force à chacun de la pluralité d'emplacements de touchers.

2. Dispositif électronique portatif selon la revendication 1, la pluralité de signaux de force comprenant des informations de force associées à une quantité de force appliquée au mécanisme de détection de force.

3. Dispositif électronique portatif selon la revendication 2, la pluralité de signaux de touchers comprenant des informations de touchers associées à un emplacement de la pluralité d'emplacements de touchers.

4. Dispositif électronique portatif selon la revendication 3, l'unité de traitement étant en outre capable d'utiliser les informations de force et les informations de touchers pour générer une distribution de force à travers la pluralité d'emplacements de touchers.

5. Dispositif électronique portatif selon la revendication 1, dans lequel la surface d'entrée de touchers multiples sert de moyen d'entrée principal nécessaire pour interagir avec le dispositif électronique portatif.

6. Dispositif électronique portatif selon la revendication 5, dans lequel le dispositif électronique portatif comprend des boutons physiques polyvalents.

7. Dispositif électronique portatif selon la revendication 1, dans lequel le dispositif électronique portatif est utilisable pour reconnaître des gestes de touchers appliqués sur la surface d'entrée de touchers multiples, et dans lequel les gestes de touchers sont utilisés pour commander des aspects du dispositif électronique portatif.

8. Dispositif électronique portatif selon la revendication 1, comprenant en outre un dispositif d'affichage (308, 332, 622) couplé de manière opérationnelle à l'unité de traitement et configuré pour présenter une interface utilisateur, le dispositif d'affichage faisant partie intégrante de la surface d'entrée de touchers multiples pour former un écran tactile multipoint.

9. Procédé de détection d'un toucher et d'une force, comprenant :
la génération d'une pluralité de signaux de touchers à partir d'une pluralité de capteurs de touchers lorsqu'une pluralité d'entrées de touchers simultanées sont reçues sur une surface d'entrée de touchers multiples à une pluralité d'emplacements de touchers ;
la génération d'une pluralité de signaux de force à partir d'une pluralité de capteurs de force lorsque la pluralité d'entrées de touchers simultanées sont reçues sur la surface d'entrée de touchers multiples à la pluralité d'emplacements de touchers ; et la détermination, à partir de la pluralité de signaux de touchers et de la pluralité de signaux de force, de coordonnées de la pluralité d'emplacements de touchers et d'une force à chacun de la pluralité d'emplacements de touchers.

10. Procédé selon la revendication 9, la pluralité de signaux de force comprenant des informations de force associées à une quantité de force appliquée au mécanisme de détection de force.

11. Procédé selon la revendication 10, la pluralité de signaux de touchers comprenant des informations de touchers associées à un emplacement de la pluralité d'emplacements de touchers.

12. Procédé selon la revendication 11, comprenant en outre l'utilisation des informations de force et des informations de touchers pour générer une distribution de force à travers la pluralité d'emplacements de touchers.

13. Procédé selon la revendication 9, comprenant en outre la reconnaissance des gestes de touchers appliqués sur le dispositif électronique portatif, dans lequel les gestes de touchers sont utilisés pour commander des aspects du dispositif électronique portatif.
